# FASCICULE DE BREVET EUROPEEN

(11) **EP 1 369 161 B1**
(45) Date de publication et mention de la délivrance du brevet: **03.04.2013**
(21) Numéro de dépôt: 03291131.5
(22) Date de dépôt: 14.05.2003
(51) Int. Cl.: B01D 41/04, G01N 23/18, B07C 5/34, G01N 9/24, G01N 23/06

(54) **Procédé de contrôle non destructif d'un dispositif de dépollution de gaz d'échappement d'un moteur à combustion interne et installation de restauration de dispositifs de dépollution**
Verfahren zur zerstörungsfreien Kontrolle einer Reinigungsvorrichtung für Motorabgase und Anlage zur Wiederherstellung von Reinigungsvorrichtungen
Method for nondestructive inspecting of a depollution device for exhaust gases of an internal combustion engine and installation for restoring depollution devices

(30) Priorité: 03.06.2002 FR 0206808
(43) Date de publication de la demande: 10.12.2003
(73) Titulaire: Peugeot Citroën Automobiles SA, 78943 Vélizy-Villacoublay Cedex (FR)
(72) Inventeur: Walter, Christian, 78180 Montigny le Bretonneux (FR)
(74) Mandataire: Ménès, Catherine

(56) Documents cités:
- EP-A- 0 376 106
- EP-A- 1 060 780
- EP-A- 1 066 870
- DE-A- 4 213 640
- DE-A- 19 817 488
- US-A- 4 415 980

## Description

L'invention concerne un procédé de contrôle non destructif d'un dispositif de dépollution de gaz d'échappement d'un moteur à combustion interne et une installation de restauration de dispositifs de dépollution.

Les moteurs à combustion interne et en particulier les moteurs utilisés sur les véhicules automobiles sont associés à une ligne d'échappement sur laquelle peuvent être disposés un ou plusieurs dispositifs de dépollution.

En particulier, dans le cas des moteurs diesel, la ligne d'échappement peut comporter un filtre à particules.

Les gaz d'échappement des moteurs Diesel qui utilisent du gazole comme carburant renferment à la fois des polluants gazeux tels que des hydrocarbures imbrûlés et des oxydes d'azote ou de carbone et des polluants solides qui sont principalement constitués par des particules de suie. Les normes antipollution appliquées aux moteurs Diesel nécessitent une élimination de plus en plus poussée des émissions de particules de suie dans les gaz d'échappement de ces moteurs.

Afin d'assurer l'élimination des particules de suie, un post-traitement des gaz d'échappement utilisant un filtre à particules est nécessaire.

Un tel filtre à particules est installé dans la ligne d'échappement du moteur et comporte au moins un élément de filtration constitué par un support filtrant à structure poreuse éventuellement associé à un autre élément de dépollution, fixé dans une enveloppe métallique qui est reliée à la ligne d'échappement. Le support filtrant ou les éléments filtrants disposés dans l'enveloppe métallique du filtre appelée "canning", peuvent être constitués par des éléments en matière céramique poreuse. Le support filtrant est traversé par les gaz d'échappement entre une extrémité d'entrée et une extrémité de sortie du filtre, ce qui permet de retenir les particules solides de suie en suspension dans les gaz d'échappement, afin d'obtenir un gaz épuré en sortie. Le filtre à particules peut être disposé en aval d'un catalyseur.

Au cours du fonctionnement du moteur, le support filtrant se charge de particules de suie qui se déposent dans le support filtrant, de sorte que le filtre se colmate progressivement. La régénération du filtre peut être obtenue en faisant brûler les suies déposées dans le support filtrant, sur la ligne même d'échappement, pendant l'utilisation du véhicule automobile.

Les suies, en présence d'oxygène, brûlent à des températures de l'ordre de 550°C à 600°C. De tels niveaux thermiques ne sont que rarement atteints par les gaz d'échappement d'un moteur Diesel d'un véhicule de tourisme. De ce fait, il est nécessaire de favoriser le début de la régénération des éléments de filtration par ajout dans le carburant d'un additif permettant d'abaisser la température de combustion des suies.

Les additifs peuvent être constitués par des composés minéraux en solution dans un solvant organique qui, mélangés dans des proportions déterminées au gazole, suivent le circuit du gazole. Ils sont ainsi injectés dans la chambre de combustion, par le système d'injection et leurs résidus de combustion se retrouvent dans les gaz d'échappement.

La présence de ces additifs dans le filtre à particules où ils sont mélangés intimement avec les particules de suies leur permet de jouer un rôle catalyseur lors de la combustion des particules de suie et d'abaisser les températures d'inflammation des suies aux environs de 350°C à 550°C.

La combustion, éventuellement catalysée, des suies dans le filtre à particules permet d'éliminer les composés organiques et le carbone contenu dans ces suies. Cependant, à l'issue de la régénération du filtre par combustion, il subsiste des résidus minéraux qui sont retenus dans le support filtrant. Ces résidus minéraux sont constitués en particulier par des résidus provenant des additifs d'aide à la combustion des suies, ou encore de lubrifiant ; ces résidus peuvent être constitués également par des particules dues à l'usure du moteur ou provenant de l'environnement extérieur, lorsque de telles particules ne sont pas retenues par le filtre à air du moteur. Tous ces résidus restent stockés dans le support filtrant du filtre à particules. Du point de vue de la composition chimique, de nombreuses espèces peuvent être présentes dans ces résidus, par exemple des oxydes, des sulfates, des nitrates ou des phosphates d'éléments tels que le cérium, le zinc, le calcium, le cuivre, le fer ou le nickel.

Le filtre à particules s'encrasse progressivement et, après une certaine durée de fonctionnement dans la ligne d'échappement, le colmatage du support filtrant peut être tel qu'il en résulte une détérioration des performances du moteur et une augmentation de la consommation de carburant. Il est nécessaire alors, pour restaurer des conditions de fonctionnement satisfaisantes du filtre, soit de remplacer le filtre par un filtre neuf, soit de nettoyer le filtre.

Du fait du coût élevé des filtres à particules, il peut être intéressant économiquement d'éviter un remplacement du filtre.

Dans EP 1 066 870 A on décrit un procédé et une installation de restauration de filtres d'air en fonction du niveau de contamination.

On a proposé, dans les demandes de brevet français 99 07682 et 01 05582, des procédés de nettoyage d'un filtre à particules dans lesquels on fait passer, à travers le support filtrant du filtre à particules, dans le sens allant de l'extrémité de sortie vers l'extrémité d'entrée du filtre, un courant de liquide de nettoyage susceptible de dissoudre ou de décoller les résidus déposés dans les canaux ou porosités du support filtrant du filtre à particules. Pour améliorer le nettoyage, selon ces procédés, on peut envoyer à travers le filtre un gaz sous pression tel que de l'air susceptible de chasser le liquide de nettoyage et les résidus décollés ou dissous.

On peut effectuer également des phases de rinçage par passage d'eau à travers le filtre et des phases de séchage à l'air chaud.

Ces procédés permettent de restaurer les filtres à particules des véhicules automobiles dans des installations industrielles où sont expédiés les filtres à particules de véhicules automobiles dont le fabricant de véhicules automobiles ou ses concessionnaires assurent l'entretien et le service après vente.

Les filtres à particules restaurés sont remontés sur des véhicules automobiles en remplacement de filtres usagés. De ce fait, il est nécessaire de garantir un parfait état du filtre qui est remonté sur le véhicule automobile, caractérisé par un très bon état de propreté et par une absence de défaut tel que des fissures à travers le support filtrant.

En outre, du fait que l'activité de restauration des filtres à particules est envisagée à une échelle industrielle, il est nécessaire d'optimiser les opérations de restauration quant au coût et à la durée nécessaire pour l'intervention et quant à l'utilisation de fluide de nettoyage ou de rinçage des filtres.

De manière plus générale, dans le cas de tout dispositif de dépollution tel qu'un piège à NOx ou un pot catalytique utilisé sur la ligne d'échappement d'un véhicule automobile, il peut être nécessaire de contrôler l'état de la partie active du dispositif de dépollution, après un certain temps de fonctionnement du dispositif de dépollution et d'effectuer, dans certains cas, une régénération du dispositif.

Pour assurer un développement de nouveaux matériaux utilisés dans des systèmes d'échappement (par exemple des substrats céramiques ou des additifs de catalyse) ou encore pour effectuer le contrôle technique de systèmes d'échappement, il peut être nécessaire d'effectuer des contrôles de l'état des parties actives de dispositifs de dépollution placés sur les systèmes d'échappement, après un certain temps de fonctionnement ou lors d'essais de tenue de longue durée.

On ne connaissait pas jusqu'ici de procédé de contrôle non destructif adapté au contrôle de la masse poreuse d'un dispositif de dépollution traversée par les gaz d'échappement du moteur, pendant son utilisation.

L'invention est donc relative à un procédé de contrôle non destructif d'un dispositif de dépollution de gaz d'échappement d'un moteur à combustion interne, comportant une masse poreuse traversée par les gaz d'échappement pendant le fonctionnement du moteur, après une phase de fonctionnement du moteur pendant laquelle des résidus se sont déposés dans la masse poreuse du dispositif de dépollution, ce procédé permettant de contrôler et d'optimiser des opérations de régénération du dispositif de dépollution, d'effectuer des études de développement de matériaux nouveaux pour la réalisation de dispositifs de dépollution et le contrôle technique de véhicules automobiles.

[nouveau] Plus précisément, conformément à la revendication 1, le procédé comporte dans l'ordre:
- une étape de contrôle initial avec détermination d'un niveau d'encrassement de la masse poreuse par les résidus par propagation à travers la masse poreuse de rayons X et détermination de l'absence de défaut dans la masse poreuse par propagation à travers la masse poreuse par un faisceau d'ultrasons ;
- au moins une étape de restauration comportant des phases de régénération par brûlage, de nettoyage et/ou trempage, rinçage et de séchage ;
- une étape de contrôle final avec détermination d'un niveau d'encrassement de la masse poreuse par les résidus par propagation à travers la masse poreuse de rayons X (et détermination de l'absence de défaut dans la masse poreuse par propagation à travers la masse poreuse par un faisceau d'ultrasons ;
et dans lequel il y a un contrôle par ultrasons du filtre après régénération ou après nettoyage du filtre mais avant séchage de sorte que les pièces comportant un défaut dans la masse poreuse sont mises au rebut sans procéder à l'étape de séchage.

L'invention est également relative à un dispositif permettant de mettre en oeuvre le procédé de contrôle non destructif suivant l'invention, dans une installation de restauration de filtres à particules.

Ainsi, l'invention a pour objet une installation de restauration de dispositifs de dépollution de gaz d'échappement de moteur à combustion interne, apte à la mise en oeuvre du procédé selon la revendication 1, caractérisée par le fait qu'elle comporte un dispositif de contrôle par rayons X, un dispositif de contrôle par ultrasons, un dispositif de restauration comportant des postes de régénération par brûlage, de nettoyage et/ou trempage, de rinçage et de séchage, des moyens de manutention pour diriger les dispositifs de dépollution d'un poste à l'autre, et une unité de contrôle et de décision reliée aux dispositifs de contrôle par rayons X et par ultrasons, paramétrée de manière à déterminer le niveau d'encrassement de la masse poreuse des dispositifs de dépollution et la présence ou l'absence de défaut dans la masse poreuse, l'installation étant apte à déterminer la présence ou l'absence de défaut dans la masse poreuse par des ultrasons, et cela après les moyens de régénération ou nettoyage et avant les moyens de séchage, l'unité de contrôle et de décision étant paramétrée pour ne diriger les dispositifs de dépollution vers le poste de séchage qu'en l'absence de détermination de la présence d'un défaut dans la masse poreuse.

Afin de bien faire comprendre l'invention, on va décrire, à titre d'exemple, en se référant aux figures jointes en annexe, la mise en oeuvre du procédé suivant l'invention au cours de la restauration de filtres à particules de véhicules à moteur diesel.

La figure 1 est une vue schématique montrant un exemple de mise en oeuvre d'un procédé dans une installation de restauration de filtres à particules usagés.

La figure 2 est une vue schématique montrant un exemple de mise en oeuvre du procédé selon l'invention pour optimiser un procédé de restauration de filtres à particules usagés.

La figure 3 est une vue schématique montrant un exemple d'application couplée à une pesée de filtres à particules.

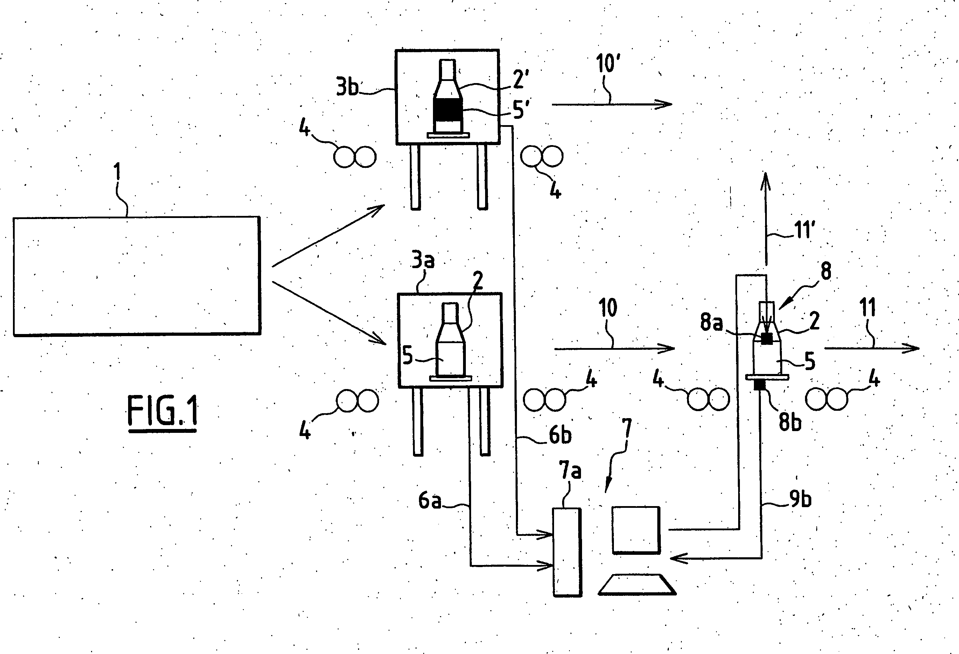

Sur la figure 1, on a représenté, de manière conventionnelle, par un rectangle 1, une installation de restauration de filtres à particules à la sortie de laquelle les filtres à particules restaurés sont soumis à des opérations de contrôle non destructif suivant l'invention.

Préalablement à la restauration par nettoyage, rinçage et séchage de la masse poreuse des filtres, on effectue une opération de régénération qui consiste à brûler les suies résiduelles contenues dans la masse poreuse du filtre, dans le cas où les filtres n'ont pas été régénérés complètement in situ sur la ligne d'échappement du véhicule automobile, avant leur démontage et leur expédition vers l'usine de traitement dans laquelle on utilise l'installation de restauration 1.

A la sortie de l'installation de restauration 1, les filtres à particules 2 parfaitement séchés sont envoyés dans une installation de contrôle par rayons X telle que 3a ou 3b, par des moyens de manutention tels que des tapis roulants ou des rouleaux représentés schématiquement sur la figure 1, sous le repère 4.

Les filtres à particules 2 tels que représentés sur la figure 1 comportent une enveloppe métallique ou "canning" renfermant une masse poreuse 5 constituant la partie active du filtre à particules arrêtant les particules de suie contenues dans les gaz d'échappement traversant le filtre à particules 2. Le canning du filtre à particules 2 comporte des pièces de raccordement aux conduites de la ligne d'échappement qui peuvent être démontées pour séparer le filtre de la ligne d'échappement.

L'appareil à rayons X représenté schématiquement en 3a et 3b comporte une enceinte dans laquelle un ensemble de filtres peuvent être placés sur un support, dans une position horizontale ou verticale, c'est-à-dire avec la direction axiale de traversée de la masse poreuse par les gaz d'échappement en position horizontale ou en position verticale. Le choix est guidé par des raisons d'encombrement et de commodité de manutention des filtres à particules. Il est toutefois nécessaire de placer toutes les pièces d'un même type de la même manière à l'intérieur de l'enceinte de contrôle par rayons X.

Dans l'enceinte de l'installation de contrôle par rayons X telle que 3a ou 3b, sont disposés des moyens de production de faisceaux de photons qui sont dirigés de manière à traverser la masse poreuse 5 du filtre dans sa direction axiale de circulation des gaz ainsi que de moyens de captage du faisceau à la sortie de la masse poreuse du filtre, de manière à déterminer, par des mesures d'intensité du faisceau de rayons X à la sortie du filtre, la densité de la matière poreuse traversée par le faisceau de rayons X. L'absorption des rayons X par la matière poreuse du filtre dépend en particulier de l'encrassement du filtre par les résidus qui peut être déterminé de manière précise en réalisant un étalonnage préalable sur différentes masses poreuses présentant des niveaux d'encrassement différents, depuis un encrassement nul (masse poreuse neuve) jusqu'à un encrassement maximal.

Les signaux fournis par les détecteurs d'intensité des faisceaux de photons à la sortie de la masse poreuse des filtres sont transmis par des lignes telles que 6a et 6b, à un module d'entrée 7a d'une unité de contrôle et de décision 7 permettant de déterminer la conformité ou la non conformité des filtres restaurés, par rapport à des critères prédéterminés relatifs à l'état du filtre.

Comme il est visible sur la figure 1, le dispositif permettant la mise en oeuvre du procédé de contrôle non destructif suivant l'invention comporte également un poste 8 de contrôle par ultrasons des filtres 2 au niveau duquel on place, sur les filtres à contrôler par ultrasons, un émetteur d'ultrasons 8a sur une face d'extrémité (d'entrée ou de sortie) de la masse poreuse 5 du filtre à contrôler et un récepteur d'ultrasons 8b au voisinage d'une seconde face d'extrémité opposée (de sortie ou d'entrée) de la masse poreuse 5 du filtre 2, pour capter les ultrasons qui se sont propagés à travers la masse poreuse 5.

La propagation des ultrasons qui ont une longueur d'onde supérieure à 10 kHz et pouvant aller jusqu'à quelques MHz dépend de la nature, de la taille et de l'état du matériau contrôlé, c'est-à-dire de la masse poreuse 5.

On effectue un étalonnage pour éliminer les caractéristiques de taille et de nature du matériau de la masse poreuse 5, de manière à caractériser l'état de dégradation de la masse poreuse 5 dans chacun des filtres contrôlés à partir de la mesure du temps de parcours du signal ultrasonore et/ou des variations de fréquence et d'amplitude de ce signal. L'état de dégradation de la masse poreuse du filtre est représentative de la présence de défauts tels que des fissures ou des trous ou de la présence de zones dans lesquelles la pièce à contrôler a subi un changement d'état.

L'émetteur d'ultrasons 8a est piloté par l'unité de contrôle et de décision 7 et le récepteur 8b du faisceau d'ultrasons à la sortie de la masse poreuse 5 est relié par une ligne 9b à l'unité de contrôle et de décision, de manière à transmettre le signal du transducteur 8b à l'unité de contrôle et de décision.

L'unité de contrôle et de décision détermine, à partir des signaux fournis par l'installation de contrôle par rayons X, l'état d'encrassement des filtres à la sortie de l'installation de restauration 1.

Dans le cas d'un filtre 2' (représenté à l'intérieur de l'installation 3b) comportant une masse poreuse 5' encrassée et insuffisamment nettoyée, l'unité de contrôle et de décision 7 commande aux moyens de manutention 4 associés à l'unité de contrôle par rayons X, l'évacuation du filtre 5', comme représenté par la flèche 10', vers une zone de rebut des filtres non conformes.

Dans le cas d'un filtre 2 dont l'état de propreté est satisfaisant, l'unité de contrôle et de décision fournit, à partir du signal fourni par l'installation de contrôle par rayons X 3a, un ordre d'évacuation du filtre 2 par les moyens de manutention 4, vers l'installation 8 de contrôle par ultrasons, comme représenté par la flèche 10.

On a représenté les filtres 2 et 2' dans deux installations de contrôle par rayons X différentes 3a et 3b, pour montrer les deux voies d'évacuation 10 et 10' des filtres suivant l'état de conformité ou de non conformité de leur encrassement à l'issue du séchage dans l'installation de restauration 1, mais il est bien évident qu'à l'intérieur d'une même installation de rayons X, on peut déterminer des états conformes et non conformes de filtres soumis au contrôle par rayons X.

Le contrôle par ultrasons dans l'installation de contrôle 8 permet de déterminer l'état du filtre, en ce qui concerne la présence éventuelle de défauts tels que des fissures.

Dans le cas où le filtre 2 présentant un état d'encrassement acceptable est également conforme en ce qui concerne son état de défaut contrôlé par ultrasons, les moyens de manutention 4 commandés par l'unité de contrôle et de décision 7 assurent l'évacuation du filtre 2 vers une zone d'expédition, comme représenté par la flèche 11.

Dans le cas où le filtre présente des défauts non acceptables, l'unité de contrôle et de décision 7 commande l'évacuation du filtre vers la zone de rebut, comme représenté par la flèche 11'.

Le procédé de contrôle suivant l'invention, successivement par rayons X et par ultrasons, permet donc d'effectuer une discrimination entre les filtres présentant, après restauration, un état conforme et qui peuvent être remontés sur un véhicule automobile et les filtres défectueux qui doivent être éliminés.

Lorsque le procédé de restauration comporte un nettoyage, suivi d'un rinçage lui-même suivi d'un séchage, on peut effectuer les contrôles par rayons X et par ultrasons tels que représentés sur la figure 1, après rinçage des filtres et avant séchage. On évite ainsi de réaliser le séchage de filtres défectueux qui devront être éliminés, ce qui permet de réduire les coûts de restauration des filtres.

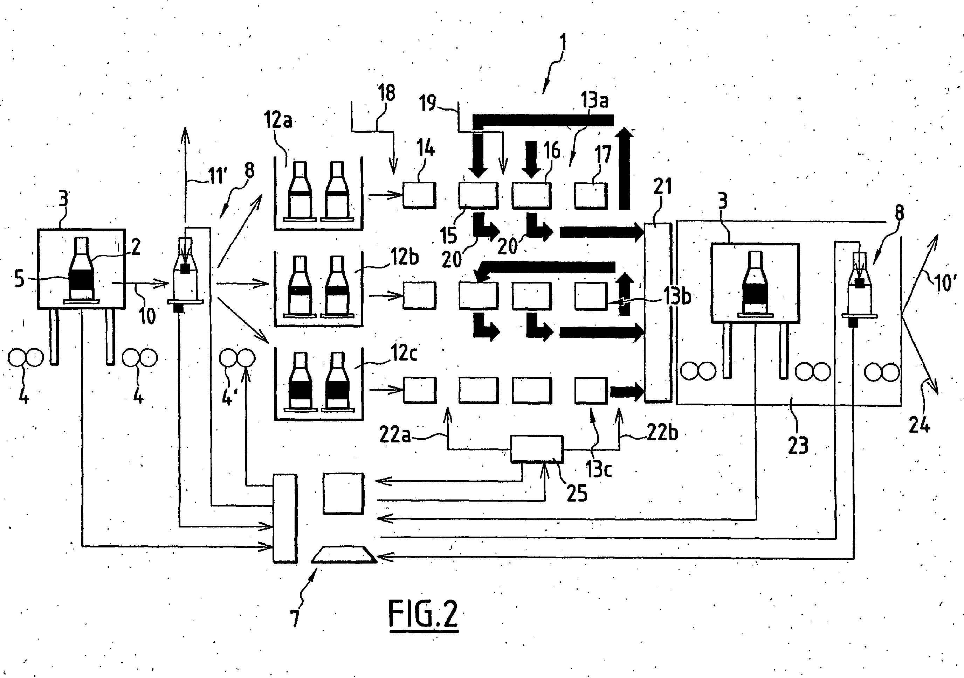

Sur la figure 2, on a représenté de manière schématique la mise en oeuvre du procédé selon l'invention, de manière à optimiser une opération industrielle de restauration de filtres à particules encrassés.

Comme dans le cas du procédé décrit sur la figure 1, on a représenté de manière successive une installation de contrôle par rayons X 3 et une installation de contrôle par ultrasons 8. Cependant, il est possible d'intervertir les opérations de contrôle par ultrasons et par rayons X dans tous les cas où cette interversion des opérations s'avère souhaitable.

Généralement, il est souhaitable d'effectuer d'abord l'opération de contrôle par ultrasons, pour éviter de traiter des pièces non conformes.

Dans le cas du mode de réalisation représenté sur la figure 2, les filtres régénérés, c'est-à-dire les filtres dans lesquels les particules de suie ont été entièrement brûlées soit sur la ligne d'échappement avant démontage du filtre 2, soit en étant portées à haute température, après démontage du filtre 2, sont soumis successivement à un contrôle par rayons X dans une installation 3 et à un contrôle par ultrasons dans une installation 8.

Les procédés de contrôle et le traitement des signaux de mesure sont effectués comme décrit précédemment, de telle sorte que l'unité de contrôle et de décision 7 permette de commander les moyens de manutention 4 à la sortie de l'installation de contrôle par rayons X. Les signaux fournis par l'installation de contrôle par ultrasons 8 permettent à l'unité de contrôle et de décision 7 de commander les moyens de manutention pour diriger vers la zone de rebut les filtres défectueux présentant des défauts telles que des fissures (flèche 11'), les filtres restants étant dirigés sous la forme de lots tels que 12a, 12b et 12c vers une installation de restauration adaptée.

Les filtres 2 sont séparés en lots tels que 12a, 12b et 12c, suivant leur niveau d'encrassement déterminé par des mesures d'absorption réalisées dans l'installation 3 de contrôle par rayons X et stockées dans une mémoire de l'unité de commande et de décision 7.

Par exemple, comme représenté sur la figure 2, on sépare les filtres pouvant subir un traitement de restauration en trois lots 12a, 12b et 12c, les filtres du lot 12a étant les moins encrassés, les filtres du lot 12c les plus encrassés et les filtres du lot 12b ayant un encrassement intermédiaire, par exemple un encrassement compris entre 0 et ¼ d'un encrassement nominal dans le cas du lot 12a, un encrassement compris entre ¼ et la moitié de l'encrassement nominal dans le cas du lot 12b et un encrassement supérieur ou égal à la moitié de l'encrassement nominal dans le cas du lot 12c.

Chacun des lots 12a, 12b et 12c est dirigé vers une installation de restauration telle que 13a, 13b ou 13c dans laquelle un traitement adapté au niveau d'encrassement du filtre est effectué par une suite d'opérations qui seront décrites par la suite.

Il est possible de diriger les filtres de chacun des lots de filtres vers une installation réglée pour le niveau d'encrassement du lot considéré ou encore de diriger l'ensemble des filtres vers une même installation qui est réglée suivant des paramètres de réglage différents, pour chacun des lots de filtres.

Les opérations de restauration des filtres peuvent comporter, successivement, une opération préliminaire de régénération par brûlage des suies effectuée dans une installation 14, une opération de nettoyage et/ou de trempage dans une installation de nettoyage et/ou un bac de trempage 15, une opération de rinçage du filtre dans une installation 16 de rinçage à l'eau et un séchage dans un dispositif 17 de séchage, par exemple à l'air chaud.

Préalablement à l'opération de régénération des filtres, on peut effectuer une pesée des filtres, comme représenté par la flèche 18. On peut ainsi confirmer les tris qui ont été effectués par mesure d'absorption dans l'installation de contrôle par rayons X.

On peut également effectuer, comme représenté par la flèche 19, un contrôle par ultrasons des filtres après régénération ou après nettoyage des filtres. On évite ainsi d'effectuer des opérations coûteuses de nettoyage, de rinçage et de séchage sur des filtres défectueux qui seront éliminés comme rebut. En effet, la masse poreuse des filtres peut être détériorée pendant l'opération de régénération, alors que cette masse poreuse ne présentait pas de défauts avant régénération.

Comme représenté par les flèches épaisses 20, on peut réutiliser les fluides mis en oeuvre lors des opérations de trempage.

En effectuant, par exemple, un contrôle de pH et des mesures de conductivité sur les fluides utilisés au cours des opérations successives de nettoyage et de rinçage, on peut déterminer, à l'aide d'une unité de traitement 21, le nombre de cycles successifs de trempage qui peuvent être effectués avec les fluides dont on a déterminé les caractéristiques chimiques et physiques à l'issue de chacun des cycles de nettoyage et de rinçage successifs. Le réemploi pour rinçage implique une filtration préalable de l'eau usagée.

Comme représenté par les flèches 22a et 22b, on peut effectuer une pesée des filtres, d'une part, après l'opération de régénération et avant l'opération de nettoyage et, d'autre part, après l'opération de séchage. Les données relatives à la pesée sont transmises à l'unité de contrôle et de décision 7. On détermine ainsi la masse de résidus enlevés du filtre et donc l'encrassement du fluide de nettoyage et de rinçage, cette donnée étant transmise à l'unité 21 de détermination du nombre de cycles de réutilisation des fluides de nettoyage et de rinçage.

Bien entendu, le nombre de cycles de réemploi du fluide de nettoyage, de trempage et de rinçage qui est généralement de l'eau contenant éventuellement des additifs dépend de l'état d'encrassement initial des filtres et donc du lot de filtres traités. On peut déterminer également les possibilités de réemploi de l'eau de trempage ou de rinçage de pièces peu encrassées pour le trempage d'autres pièces peu encrassées.

Comme décrit en regard de la figure 1, on effectue, après la restauration des filtres, leur contrôle dans une installation de contrôle final 23 comportant un dispositif 3 de contrôle par rayons X et un dispositif 8 de contrôle par ultrasons, les données fournies par les dispositifs de contrôle 3 et 8 étant transmises à l'unité de contrôle et de décision 7.

Les filtres jugés conformes à l'issue des contrôles sont dirigés vers une zone d'expédition 24 et les filtres défectueux vers la zone de rebut (flèche 10').

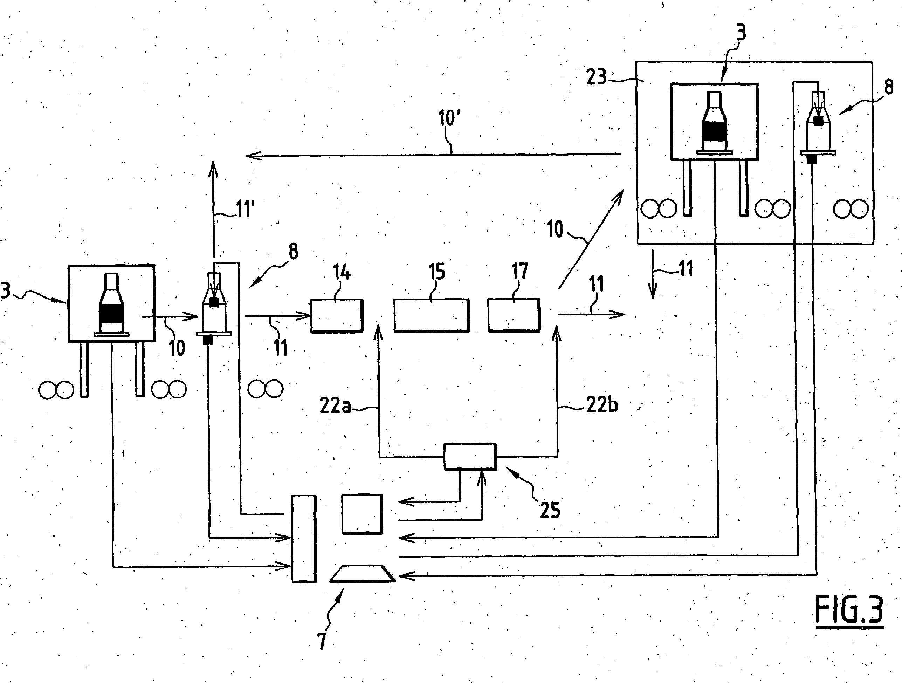

Sur la figure 3, on a représenté, de manière schématique, la mise en oeuvre d'un procédé pour effectuer le contrôle de filtres à particules avant et après une opération de régénération suivie d'un nettoyage et d'un séchage pour obtenir une restauration complète de filtres à particules usagés.

Comme dans le cas de l'installation représentée sur la figure 2, on utilise, préalablement à la régénération et à la restauration des filtres, un dispositif 3 de contrôle par rayons X et un dispositif 8 de contrôle par ultrasons ainsi qu'en sortie de la ligne de restauration, un ensemble de contrôle 23 comportant un dispositif de contrôle par rayons X et un dispositif de contrôle par ultrasons.

Suivant la sévérité du contrôle recherché et la cadence de production de l'installation de restauration des filtres à particules, on peut utiliser les mêmes dispositifs de contrôle par rayons X 3 et par ultrasons 8 pour assurer le contrôle des filtres avant régénération ou après le nettoyage et le séchage de l'opération de restauration ou deux ensemble de dispositifs de contrôle différents à l'entrée et à la sortie de l'installation.

Les filtres à particules tels que reçus dans l'usine de restauration sont soumis à un premier contrôle par rayons X puis à un premier contrôle par ultrasons. Les filtres à particules jugés défectueux sont évacués vers une zone de rebut, comme représenté par la flèche 11'. Les filtres satisfaisants sont évacués vers l'installation de régénération 14 puis l'installation de nettoyage 15 et l'installation de séchage 17 de l'usine de restauration, comme représenté par la flèche 11.

De manière générale, les contrôles effectués sont identiques à ceux qui ont déjà été décrits en regard des figures 1 et 2.

Toutefois, on utilise une balance 25 pour effectuer une opération de pesée des filtres à particules après la régénération dans l'installation 14 (flèche 22a) et après le séchage des filtres dans l'installation de séchage 17 (flèche 22b).

Les données relatives aux pesées 22a et 22b sont transmises à l'unité de contrôle et de décision 7 qui reçoit également les signaux relatifs au contrôle par rayons X et par ultrasons sous la forme de signaux.

L'unité de contrôle et de décision 7 est paramétrée, d'une part, à partir de lois physiques reliant la masse de résidus déterminée par pesée et l'encrassement observé par rayons X et à partir de critères de seuils d'acceptation pour l'encrassement et les mesures par ultrasons.

Les opérations de pesée permettent de déterminer, de manière précise, la quantité de résidus retirée du filtre à particules, pendant le nettoyage.

Le procédé et le dispositif suivant l'invention permettent donc d'assurer une gestion optimale d'une usine de restauration de filtres à particules par des contrôles non destructifs comportant un contrôle par rayons X et un contrôle par ultrasons.

L'installation de contrôle par rayons X peut être une installation de radioscopie, de radiographie ou de tomographie, le contrôle pouvant être effectué sur l'ensemble des filtres à particules ou sur des échantillons prélevés dans l'ensemble des filtres reçus et traités dans l'installation de restauration de filtres à particules.

Le dispositif de contrôle par ultrasons comporte généralement des émetteurs et récepteurs qui sont en position décalée l'un par rapport à l'autre dans des directions transversales du filtre, c'est-à-dire des directions perpendiculaires à la direction de circulation des gaz. On obtient ainsi un meilleur balayage de la masse poreuse des filtres généralement constituée par une céramique. Toutefois, il est nécessaire de placer les émetteurs et récepteurs du dispositif de contrôle par ultrasons dans des positions décalées identiques pour l'ensemble des filtres à particules soumis au contrôle par ultrasons, pour une exploitation des mesures en fonction de valeurs d'étalonnage.

Les contrôles par rayons X et par ultrasons peuvent être effectués également en cours de restauration des filtres, de manière à optimiser l'utilisation des fluides de nettoyage, de trempage et de rinçage ou de manière à suivre en temps réel l'évolution de l'élimination des suies pendant le nettoyage. On peut ainsi adapter la quantité de fluide de nettoyage à appliquer à chacune des masses poreuses de filtres à particules. On peut également, après avoir contrôlé l'état d'encrassement du filtre à particules, si cet état d'encrassement n'est pas satisfaisant, soumettre le filtre à un nouveau nettoyage et à un nouveau rinçage avant d'effectuer le séchage.

L'installation de restauration des filtres comporte, dans une partie d'entrée de l'installation à l'arrivée des filtres à particules, un dispositif vidéo optique permettant d'identifier les filtres parvenant à l'installation.

Dans le cas d'une installation pouvant traiter d'autres dispositifs que des filtres à particules, par exemple des dispositifs de dépollution d'un type quelconque, le dispositif vidéo optique permet d'identifier le type de dispositif parvenant à l'entrée de l'installation de restauration.

Le procédé et le dispositif suivant l'invention s'appliquent non seulement au contrôle de procédures de rénovation et de restauration de dispositifs de dépollution mais encore à des études pour la conception ou la mise au point de systèmes de traitement de gaz d'échappement, la sélection de matériaux utilisés pour la conception de tels dispositifs, la détermination de la densité de résidus dans des dispositifs de dépollution après un certain temps de fonctionnement d'un moteur et le contrôle d'endurance de systèmes de dépollution, ces contrôles pouvant être effectués sur la masse poreuse céramique isolée du dispositif de dépollution ou encore sur un élément du système d'échappement comportant la masse poreuse enfermée dans une enveloppe métallique ou canning. Les contrôles effectués pour réaliser ces tâches diverses peuvent être aussi bien des contrôles par rayons X que des contrôles par ultrasons et plus généralement des contrôles par rayons X combinés à des contrôles par ultrasons.

L'invention s'applique non seulement au contrôle non destructif de la masse poreuse de filtres à particules mais encore au contrôle de tout dispositif de dépollution des gaz d'échappement d'un moteur.

## Revendications

1. Procédé de restauration d'un dispositif de dépollution (2) de gaz d'échappement d'un moteur à combustion interne, à savoir un filtre, ce dispositif comportant une masse poreuse (5) traversée par les gaz d'échappement pendant le fonctionnement du moteur, après une phase de fonctionnement du moteur pendant laquelle des résidus se sont déposés dans la masse poreuse (5) du dispositif de dépollution (2), comportant, dans l'ordre :
- une étape de contrôle initial avec détermination d'un niveau d'encrassement de la masse poreuse (5) par les résidus par propagation à travers la masse poreuse (5) de rayons X (3) et détermination de l'absence de défaut dans la masse poreuse par propagation à travers la masse poreuse (5) par un faisceau d'ultrasons (8) ;
- au moins une étape de restauration comportant des phases de régénération par brûlage (14), de nettoyage et/ou trempage (15), rinçage (16) et de séchage (17) ;
- une étape de contrôle final avec détermination d'un niveau d'encrassement de la masse poreuse (5) par les résidus par propagation à travers la masse poreuse (5) de rayons X (3) et détermination de l'absence de défaut dans la masse poreuse par propagation à travers la masse poreuse (5) par un faisceau d'ultrasons (8) ;
et dans lequel il y a un contrôle (19) par ultrasons du filtre après régénération ou après nettoyage du filtre mais avant séchage de sorte que les pièces comportant un défaut dans la masse poreuse sont mises au rebut sans procéder à l'étape de séchage.

2. Procédé selon la revendication 1, **caractérisé en ce que** les dispositifs de dépollution (2) sont séparés en lots en fonction du niveau d'encrassement, pour être ou directement envoyés au rebut ou soumis à une opération de restauration adaptée à leur niveau d'encrassement.

3. Procédé selon la revendication 2, **caractérisé par** des opérations de pesée (22a, 22b) des dispositifs de dépollution (2), avant et après nettoyage et séchage, la masse de résidus enlevés par le nettoyage, de manière à déterminer un nombre de cycles de réutilisation de fluide de nettoyage ou de rinçage des masses poreuses (5) des filtres à particules (2).

4. Procédé suivant la revendication 3, **caractérisé par le fait qu'**on effectue de plus des contrôles de propriétés physiques ou chimiques des fluides de nettoyage et/ou de rinçage de la masse poreuse (5) tels que des mesures de pH ou de conductivité électrique, de manière à déterminer le nombre de cycles de réutilisation des fluides de nettoyage et/ou de rinçage.

5. Installation de restauration de dispositifs de dépollution (2) de gaz d'échappement de moteur à combustion interne, apte à la mise en oeuvre du procédé selon la revendication 1, **caractérisée par le fait qu'**elle comporte un dispositif (3) de contrôle par rayons X, un dispositif (8) de contrôle par ultrasons, un dispositif de restauration comportant des postes de régénération par brûlage (14), de nettoyage et/ou trempage (15), de rinçage (16) et de séchage (17), des moyens de manutention (4, 4') pour diriger les dispositifs de dépollution (2) d'un poste à l'autre, et une unité de contrôle et de décision (7) reliée aux dispositifs de contrôle par rayons X et par ultrasons, paramétrée de manière à déterminer le niveau d'encrassement de la masse poreuse (5) des dispositifs de dépollution (2) et la présence ou l'absence de défaut dans la masse poreuse (5), l'installation étant apte à déterminer la présence ou l'absence de défaut dans la masse poreuse (5) par des ultrasons, et cela après les moyens de régénération ou nettoyage et avant les moyens de séchage, l'unité de contrôle et de décision étant paramétrée pour ne diriger les dispositifs de dépollution vers le poste de séchage (17) qu'en l'absence de détermination de la présence d'un défaut dans la masse poreuse.

6. Installation suivant la revendication 5, **caractérisée par le fait que** les moyens de manutention (4, 4') sont commandés par l'unité de contrôle et de décision (7), pour assurer le transfert de dispositifs de dépollution (2) de manière automatique, en fonction de résultats de contrôles non destructifs, entre les dispositifs de contrôle, les postes de nettoyage (15, 16, 17), une zone de conditionnement et d'expédition ou une zone de rebut, l'installation pouvant fonctionner de manière totalement automatique.

7. Installation suivant la revendication 6, **caractérisée par le fait qu'**elle comporte de plus des moyens de tri automatique (4') commandés par l'unité de contrôle et de décision (7) pour la constitution de lots (12a, 12b, 12c) de dispositifs de dépollution (2) suivant le niveau d'encrassement de la masse poreuse (5) des dispositifs de dépollution (2) de chacun des lots (12a, 12b, 12c) et de transmission des dispositifs de dépollution (2) de chacun des lots (12a, 12b, 12c) à une installation de nettoyage (13a, 13b, 13c) dont les paramètres de fonctionnement sont adaptés au nettoyage des dispositifs de dépollution (2) de chacun des lots (12a, 12b, 12c).

8. Installation suivant l'une quelconque des revendications 5 à 7, **caractérisée par le fait qu'**elle comporte de plus une balance (25) de pesée automatique des dispositifs de dépollution (2).

9. Installation suivant l'une quelconque des revendications 5 à 8, **caractérisée par le fait qu'**elle comporte un dispositif de contrôle non destructif par rayons X de l'un des types suivants : dispositif de radioscopie, dispositif de radiographie, dispositif de tomographie.

10. Installation suivant l'une quelconque des revendications 5 à 9, **caractérisée par le fait que** le dispositif de contrôle par ultrasons comporte un émetteur (8a) et un émetteur (8b) disposés en vis-à-vis, respectivement, d'une face d'extrémité d'entrée et d'une face d'extrémité de sortie de la masse poreuse (5) du dispositif de dépollution (2) dans le sens de circulation des gaz dans la masse poreuse (5) du dispositif de dépollution (2) et décalés l'un par rapport à l'autre dans des directions transversales perpendiculaires à la direction de propagation des gaz dans la masse poreuse (5).

11. Installation suivant l'une quelconque des revendications 5 à 10, pour la restauration de filtres à particules de véhicules automobiles, **caractérisée par le fait qu'**elle comporte une balance (25) pour effectuer des pesées (18, 22a), avant et après régénération des filtres dans le dispositif de régénération (14).

## Claims

1. A method for restoring a depollution device (2) of exhaust gases of an internal combustion engine, namely a filter, this device comprising a porous mass (5) passed through by the exhaust gases during the operation of the engine, after an operating phase of the engine during which residues are deposited in the porous mass (5) of the depollution device (2), comprising, in order:
- an initial control step with determining of a level of clogging of the porous mass (5) by the residues by propagation through the porous mass (5) of X-rays (3) and determining of the absence of defect in the porous mass by propagation through the porous mass (5) by an ultrasonic beam (8);
- at least one restoration step comprising phases of regeneration by burning off (14), of cleaning and/or soaking (15), rinsing (16) and of drying (17);
- a final control step with determining of a level of clogging of the porous mass (5) by the residues by propagation through the porous mass (5) of X-rays (3) and determining of the absence of defect in the porous mass by propagation through the porous mass (5) by an ultrasonic beam (8);
and in which there is a control (19) by ultrasound waves of the filter after regeneration or after cleaning of the filter but before drying so that the parts comprising a defect in the porous mass are scrapped without proceeding to the drying step.

2. The method according to Claim 1, **characterized in that** the depollution devices (2) are separated in batches as a function of the level of clogging, to be either directly sent for scrap or subjected to a restoration operation suited to their level of clogging.

3. The method according to Claim 2, **characterized by** weighing operations (22a, 22b) of the depollution devices (2), before and after cleaning and drying, the mass of residues removed by cleaning, so as to determine a number of cycles of reuse of cleaning or rinsing fluid of the porous masses (5) of the particle filters (2).

4. The method according to Claim 3, **characterized by** the fact that in additions controls are carried out of physical or chemical properties of the cleaning and/or rinsing fluids of the porous mass (5) such as measurements of pH or of electrical conductivity, so as to determine the number of cycles of reuse of the cleaning and/or rinsing fluids.

5. An installation for the restoration of depollution devices (2) of exhaust gases of an internal combustion engine, able to implement the method according to Claim 1, **characterized by** the fact that it comprises a device (3) for control by X-rays, a device (8) for control by ultrasound waves, a restoration device comprising stations for regeneration by burning off (14), of cleaning and/or soaking (15), of rinsing (16) and of drying (17), handling means (4, 4') for directing the depollution devices (2) from one station to the other, and a control and decision unit (7), connected to the devices for control by X-rays and by ultrasound waves, which is parameterized so as to determine the level of clogging of the porous mass (5) of the depollution devices (2) and the presence or absence of defect in the porous mass (5), the installation being able to determine the presence or absence of defect in the porous mass (5) by ultrasound waves, this being after the regeneration or cleaning means and before the drying means, the control and decision unit being parameterized so as to only direct the depollution devices towards the drying station (17) in the absence of a determining of the presence of a defect in the porous mass.

6. The installation according to Claim 5, **characterized by** the fact that the handling means (4, 4') are driven by the control and decision unit (7), to ensure the transfer of depollution devices (2) automatically, as a function of results of non-destructive tests, between the control devices, the cleaning stations (15, 16, 17), a packing and dispatching zone or a scrapping zone, the installation being able to function in a totally automatic manner.

7. The installation according to Claim 6, **characterized by** the fact that it comprises, in addition, automatic screening means (4') driven by the control and decision unit (7) for the constituting of batches (12a, 12b, 12c) of depollution devices (2) according to the level of clogging of the porous mass (5) of the depollution devices (2) of each of the batches (12a, 12b, 12c) and for transmission of the depollution devices (2) of each of the batches (12a, 12b, 12c) to a cleaning installation (13a, 13b, 13c), the operating parameters of which are suited to the cleaning of the depollution devices (2) of each of the batches (12a, 12b, 12c).

8. The installation according to any one of Claims 5 to 7, **characterized by** the fact that it comprises, in addition, an automatic weighing device (25) for the depollution devices (2).

9. The installation according to any one of Claims 5 to 8, **characterized by** the fact that it comprises a device for non-destructive testing by X-rays of one of the following types: radioscopic device, radiographic device, tomographic device.

10. The installation according to any one of Claims 5 to 9, **characterized by** the fact that the control device by ultrasound waves comprises an emitter (8a) and an emitter (8b) arranged facing, respectively, an inlet end face and an outlet end face of the porous mass (5) of the depollution device (2) in the direction of circulation of the gases in the porous mass (5) of the depollution device (2) and offset with respect to one another in transverse directions perpendicular to the direction of propagation of the gases in the porous mass (5).

11. The installation according to any one of Claims 5 to 10, for the restoration of particle filters of motor vehicles, **characterized by** the fact that it comprises a weighing device (25) to carry out weighing operations (18, 22a) before and after regeneration of the filters in the regeneration device (14).

## Patentansprüche

1. Verfahren zur Wiederherstellung einer Reinigungsvorrichtung (2) von Abgasen eines Verbrennungsmotors, nämlich eines Filters, wobei diese Vorrichtung eine poröse Masse (5) aufweist, die von den Abgasen während des Betriebs des Motors durchquert wird, nach einer Betriebsphase des Motors, während welcher sich Reste nicht in der porösen Masse (5) der Reinigungsvorrichtung (2) abgelagert haben, mit dieser Reihenfolge:
- ein anfänglicher Kontrollschritt mit Bestimmen eines Verschmutzungsniveaus der porösen Masse (5) durch Reststoffe durch Ausbreiten von Röntgenstrahlen (3) durch die poröse Masse (5), und Bestimmen des Fehlens von Mängeln in der porösen Masse (5) durch Ausbreiten eines Ultraschallstrahls (8) durch die poröse Masse,
- wenigstens ein Wiederherstellungsschritt, der Regenerierungsphasen durch Verbrennen (14), Reinigen und/oder Einweichen (15), Spülen (16) und Trocknen (17) aufweist,
- ein abschließender Schritt mit Bestimmen eines Verschmutzungsniveaus der porösen Masse (5) durch die Reste durch Ausbreiten von Röntgenstrahlen (3) durch die poröse Masse (5) und Bestimmen der Abwesenheit von Mängeln in der porösen Masse durch Ausbreiten eines Ultraschallstrahls (8) durch die poröse Masse (5),
und bei dem eine Kontrolle (19) durch Ultraschall des Filters nach Regenerierung oder nach Reinigung des Filters aber vor dem Trocknen derart besteht, dass die Teile, die einen Mangel in der porösen Masse aufweisen, zum Ausschuss gegeben werden, ohne dass der Schritt des Trocknens ausgeführt wird.

2. Verfahren nach Anspruch 1, **dadurch gekennzeichnet, dass** die Reinigungsvorrichtungen (2) in Chargen in Abhängigkeit von dem Verschmutzungsniveau getrennt werden, um direkt zum Ausschuss geschickt zu werden, oder um einem ihrem Verschmutzungsniveau entsprechenden Wiederherstellungsvorgang unterzogen zu werden.

3. Verfahren nach Anspruch 2, **gekennzeichnet durch** Wiegevorgänge (22a, 22b) der Reinigungsvorrichtungen (2) vor und nach dem Reinigen und dem Trocknen, der Masse von Resten, die **durch** das Reinigen entfernt wurden, um eine Anzahl von Wiederverwendungszyklen der Reinigungs- oder Spülflüssigkeit der porösen Massen (5) der Partikelfilter (2) zu bestimmen.

4. Verfahren nach Anspruch 3, **dadurch gekennzeichnet, dass** man außerdem Kontrollen physikalischer oder chemischer Eigenschaften der Reinigungs- und/oder Spülflüssigkeiten der porösen Masse (5) ausführt, wie zum Beispiel pH-Messungen oder Messungen der elektrischen Leitfähigkeit, um die Anzahl von Wiederverwendungszyklen der Reinigungs- und/oder Spülflüssigkeiten zu bestimmen.

5. Anlage zum Wiederherstellen von Reinigungsvorrichtungen (2) von Verbrennungsmotorabgasen, die zum Umsetzen des Verfahrens nach Anspruch 1 geeignet ist, **dadurch gekennzeichnet, dass** sie eine Röntgenprüfvorrichtung (3), eine Ultraschallprüfvorrichtung (8), eine Wiederherstellungsvorrichtung aufweist, die Regenerierungsposten durch Verbrennen (14), Reinigen und/oder Einweichen (15), Spülen (16) und Trocknen (17) aufweist, Fördermittel (4, 4'), um die Reinigungsvorrichtungen (2) von einem Posten zum anderen zu lenken, und eine Steuer- und Beschlussfassungseinheit (7), die an die Röntgen- und Ultraschallprüfvorrichtungen angeschlossen ist, die derart parametriert ist, dass das Verschmutzungsniveau der porösen Masse (5) der Reinigungsvorrichtungen (2) und die Gegenwart oder die Abwesenheit von Mängeln in der porösen Masse (5) bestimmt wird, wobei die Anlage geeignet ist, um die Gegenwart oder die Abwesenheit von Mängeln in der porösen Masse (5) durch Ultraschall zu bestimmen und dies, nach den Regenerierungs- oder Reinigungsmitteln und vor den Trockenmitteln, wobei die Steuer- und Beschlussfassungseinheit parametriert ist, um die Reinigungsvorrichtungen nur bei Fehlen des Bestimmens der Gegenwart eines Mangels in der porösen Masse zu dem Trockenposten (17) zu lenken.

6. Anlage nach Anspruch 5, **dadurch gekennzeichnet, dass** die Fördermittel (4, 4') von der Steuer- und Beschlussfassungseinheit (7) gesteuert werden, um den Transfer von Reinigungsvorrichtungen (2) automatisch in Abhängigkeit von Ergebnissen zerstörungfreier Prüfungen zwischen den Steuervorrichtungen, den Reinigungsposten (15, 16, 17), einem Verpackungs- und Versandbereich oder einem Ausschussbereich sicherzustellen, wobei die Anlage vollautomatisch funktionieren kann.

7. Anlage nach Anspruch 6, **dadurch gekennzeichnet, dass** sie außerdem Mittel zum automatischen Sortieren (4') aufweist, die von der Steuer- und Beschlussfassungseinheit (7) zum Bilden von Chargen (12a, 12b, 12c) von Reinigungsvorrichtungen (2) in Abhängigkeit von dem Verschmutzungsniveau der porösen Masse (5) der Reinigungsvorrichtungen (2) jeder der Chargen (12a, 12b, 12c) und zum Übertragen der Reinigungsvorrichtungen (2) jeder der Chargen (12a, 12b, 12c) zu einer Reinigungsanlage (13a, 13b, 13c), deren Betriebsparameter zum Reinigen der Reinigungsvorrichtungen (2) jeder der Chargen (12a, 12b, 12c) angepasst sind, gesteuert werden.

8. Anlage nach einem der Ansprüche 5 bis 7, **dadurch gekennzeichnet, dass** sie außerdem eine Waage (25) zum automatischen Wiegen der Reinigungsvorrichtungen (2) aufweist.

9. Anlage nach einem der Ansprüche 5 bis 8, **dadurch gekennzeichnet, dass** sie eine Vorrichtung zur zerstörungfreien Prüfung durch Röntgenstrahlen eines der folgenden Typen aufweist: Röntgenografie-, Röntgenfotografie-, Tomografievorrichtung.

10. Anlage nach einem der Ansprüche 5 bis 9, **dadurch gekennzeichnet, dass** die Ultraschallprüfvorrichtung einen Sender (8a) und einen Sender (8b) aufweist, die einander jeweils an einer Eingangsendseite und einer Ausgangsendseite der porösen Masse (5) der Reinigungsvorrichtung (2) in die Zirkulationsrichtung der Gase in der porösen Masse (5) der Reinigungsvorrichtung (2) gegenüberliegen und in Bezug zueinander in Querrichtungen senkrecht zu der Ausbreitungsrichtung der Gase in der porösen Masse (5) versetzt sind.

11. Anlage nach einem der Ansprüche 5 bis 10 zur Wiederherstellung von Partikelfiltern von Kraftfahrzeugen, **dadurch gekennzeichnet, dass** sie eine Waage (25) aufweist, um das Wiegen (18, 22a) vor und nach der Regenerierung der Filter in der Regenerierungsvorrichtung (14) auszuführen.
